# EUROPÄISCHE PATENTSCHRIFT

(11) **EP 3 904 837 B1**
(45) Veröffentlichungstag und Bekanntmachung des Hinweises auf die Patenterteilung: **02.08.2023**
(21) Anmeldenummer: 20171972.1
(22) Anmeldetag: 29.04.2020
(51) Int. Cl.: G01D 5/244

(54) **POSITIONSMESSEINRICHTUNG**
POSITION MEASURING DEVICE
DISPOSITIF DE MESURE DE POSITION

(43) Veröffentlichungstag der Anmeldung: 03.11.2021
(73) Patentinhaber: Dr. Johannes Heidenhain GmbH, 83301 Traunreut (DE)
(72) Erfinder: SCHLICKSBIER, Thilo, 83278 Traunstein (DE); NUTZINGER, Tarek, 83377 Vachendorf (DE)

(56) Entgegenhaltungen:
- EP-A1- 3 293 495
- EP-A2- 0 348 660
- DE-U1- 20 022 027
- JP-A- 2001 174 247

## Beschreibung

### GEBIET DER TECHNIK

Die vorliegende Erfindung betrifft eine Positionsmesseinrichtung nach dem Oberbegriff des Anspruchs 1.

### STAND DER TECHNIK

JP 2001 174 247 A offenbart eine Positionsmesseinrichtung, insbesondere eine Längenmesseinrichtung. Die Positionsmesseinrichtung umfasst ein Gehäuse, das ein sich in einer Längsrichtung erstreckendes Hohlprofil aufweist, einen Maßstab, der innerhalb des Gehäuses angeordnet ist, und eine Abtasteinrichtung zur Abtastung des Maßstabs. Das Gehäuse weist mehrere als Kühlkanäle dienende Durchgangsöffnungen auf. Die Durchgangsöffnungen erstrecken sich jeweils in Längsrichtung durch das Hohlprofil.

EP 3 293 495 A1 offenbart eine Positionsmesseinrichtung nach dem Oberbegriff des Anspruchs 1.

Weitere Positionsmesseinrichtungen mit Kühlkanälen bzw. unterschiedlichen Maßnahmen zur Kühlung sind in JP 2001 174247 A und EP 0 348 660 A2 offenbart.

Ein Nachteil der bekannten Positionsmesseinrichtung ist, dass eine Temperaturverteilung eines durch die Durchgangsöffnungen fließenden Kühlmediums über die Länge des Maßstabs nicht homogen ist. Dadurch wird keine optimale Kühlung des Maßstabs erreicht. Dies hat zur Folge, dass eine Genauigkeit der Positionsmessung im Vergleich zu einer optimalen Kühlung des Maßstabs verringert ist oder zumindest nicht beibehalten wird.

### ZUSAMMENFASSUNG DER ERFINDUNG

Der vorliegenden Erfindung liegt die Aufgabe zugrunde, eine Positionsmesseinrichtung anzugeben, mit der eine präzise Positionsmessung in Längsrichtung eines innerhalb eines Gehäuses der Positionsmesseinrichtung angeordneten Maßstabs ermöglicht wird.

Diese Aufgabe wird erfindungsgemäß durch die Positionsmesseinrichtung mit den Merkmalen des Anspruchs 1 gelöst.

Die erfindungsgemäß ausgebildete Positionsmesseinrichtung umfasst ein Gehäuse, das einen sich in einer Längsrichtung erstreckenden hohlprofilförmigen ersten Abschnitt aufweist, einen Maßstab, der innerhalb des Gehäuses angeordnet ist, und eine Abtasteinrichtung zur Abtastung des Maßstabs. Der Maßstab erstreckt sich in Längsrichtung. Das Gehäuse weist mindestens eine erste Durchgangsöffnung und eine zweite Durchgangsöffnung auf. Die beiden Durchgangsöffnungen erstrecken sich jeweils in Längsrichtung zumindest teilweise durch den ersten Abschnitt hindurch. Die Positionsmesseinrichtung weist einen an einem Ende des ersten Abschnitts angeordneten Verbindungskanal auf. Die beiden Durchgangsöffnungen sind über den Verbindungskanal miteinander verbunden.

Vorzugsweise dient der Verbindungskanal als fluidische Verbindung zwischen Querschnitten der beiden Durchgangsöffnungen.

Der Verbindungskanal erstreckt sich zwischen einem Querschnitt der ersten Durchgangsöffnung und einem Querschnitt der zweiten Durchgangsöffnung.

Der Verbindungskanal ist derart ausgebildet, dass ein in einer ersten Richtung parallel zur Längsrichtung durch einen Querschnitt der ersten Durchgangsöffnung hindurch strömendes Fluid derart umgelenkt wird, dass es nach dessen Umlenkung in einer zur ersten Richtung entgegengesetzten zweiten Richtung durch einen Querschnitt der zweiten Durchgangsöffnung hindurch strömt.

Vorzugsweise wird der Verbindungskanal durch Strukturen innerhalb eines Deckelelements und/oder innerhalb eines Dichtelements gebildet. Diese Strukturen umfassen insbesondere eine Ausnehmung sowie Durchgangsöffnungen.

Des Weiteren kann die Positionsmesseinrichtung ein U-förmiges Umlenkelement aufweisen. Das Umlenkelement weist eine der ersten Durchgangsöffnung zugeordnete Ein- oder Ausgangsöffnung und eine der zweiten Durchgangsöffnung zugeordnete Ein- oder Ausgangsöffnung auf.

Durch die Erfindung wird eine homogene Temperaturverteilung des Kühlmediums (Fluid) über die Länge des Maßstabs erreicht. Dies ermöglicht wiederum eine präzise Positionsmessung in Längsrichtung des Maßstabs. Hierzu ist insbesondere der Verbindungskanal als fluidische Verbindung zur Umlenkung des Fluids auf einer Seite der Positionsmesseinrichtung vorgesehen. Die erste Durchgangsöffnung und die zweite Durchgangsöffnung dienen vorzugsweise jeweils als Kühlkanäle zur Erzeugung eines in der ersten Richtung und in der zweiten Richtung (d. h. entgegengesetzte Richtungen) verlaufenden Fluidstroms. Ferner ist es vorteilhaft, wenn der Anschluss für den Einlauf (Fluideingang) und für den Auslauf (Fluidausgang) auf der anderen Seite der Positionsmesseinrichtung vorgesehen ist. Dies ermöglicht zudem eine einfache Montage des Fluideingangs und des Fluidausgangs zur Verbindung mit einem Kühlkreislauf sowie einen kompakten Aufbau bzw. eine Reduzierung des Platzbedarfs der Positionsmesseinrichtung.

Vorzugsweise ist der Anschluss für den Fluideingang und für den Fluidausgang auf einer einzigen, insbesondere frei wählbaren Seite der Positionsmesseinrichtung vorgesehen.

Die erste Durchgangsöffnung und die zweite Durchgangsöffnung können auch als Kühlbohrungen bezeichnet werden.

Vorteilhafte Ausbildungen der Erfindung entnimmt man den abhängigen Ansprüchen.

Unter einer ersten Blickrichtung wird im Folgenden die Blickrichtung zum ersten Abschnitt hin verstanden. Unter einer zweiten Blickrichtung wird im Folgenden die Blickrichtung vom ersten Abschnitt weg verstanden.

### KURZE BESCHREIBUNG DER ZEICHNUNGEN

Einzelheiten und Vorteile der erfindungsgemäßen Positionsmesseinrichtung ergeben sich aus der nachfolgenden Beschreibung von Ausführungsbeispielen anhand der beiliegenden Figuren.

Es zeigen
- Figur 1a: eine perspektivische Explosionsansicht einer Positionsmesseinrichtung gemäß einem ersten Ausführungsbeispiel;
- Figur 1b: eine perspektivische Ansicht der Positionsmesseinrichtung gemäß dem ersten Ausführungsbeispiel;
- Figur 2a: eine perspektivische Ansicht einer Seite der Positionsmesseinrichtung gemäß dem ersten Ausführungsbeispiel;
- Figur 2b: eine perspektivische Explosionsansicht der ersten Seite der Positionsmesseinrichtung gemäß dem ersten Ausführungsbeispiel in einer ersten Blickrichtung;
- Figur 2c: eine perspektivische Schnittdarstellung der ersten Seite der Positionsmesseinrichtung gemäß dem ersten Ausführungsbeispiel;
- Figur 2d: eine perspektivische Explosionsansicht der ersten Seite der Positionsmesseinrichtung gemäß dem ersten Ausführungsbeispiel in einer zweiten Blickrichtung;
- Figur 2e: eine perspektivische Ansicht einer zweiten Seite der Positionsmesseinrichtung gemäß dem ersten Ausführungsbeispiel;
- Figur 2f: eine perspektivische Explosionsansicht der zweiten Seite der Positionsmesseinrichtung gemäß dem ersten Ausführungsbeispiel in einer ersten Blickrichtung;
- Figur 2g: eine perspektivische Schnittdarstellung der zweiten Seite der Positionsmesseinrichtung gemäß dem ersten Ausführungsbeispiel;
- Figur 2h: eine perspektivische Explosionsansicht der zweiten Seite der Positionsmesseinrichtung gemäß dem ersten Ausführungsbeispiel in einer zweiten Blickrichtung;
- Figur 3a: eine perspektivische Ansicht einer ersten Seite einer Positionsmesseinrichtung gemäß einem zweiten Ausführungsbeispiel;
- Figur 3b: eine perspektivische Explosionsansicht der ersten Seite der Positionsmesseinrichtung gemäß dem zweiten Ausführungsbeispiel in einer ersten Blickrichtung;
- Figur 3c: eine perspektivische Schnittdarstellung der ersten Seite der Positionsmesseinrichtung gemäß dem zweiten Ausführungsbeispiel;
- Figur 3d: eine perspektivische Explosionsansicht der ersten Seite der Positionsmesseinrichtung gemäß dem zweiten Ausführungsbeispiel in einer zweiten Blickrichtung;
- Figur 4a: eine perspektivische Ansicht einer ersten Seite einer Positionsmesseinrichtung gemäß einem dritten Ausführungsbeispiel;
- Figur 4b: eine perspektivische Explosionsansicht der ersten Seite der Positionsmesseinrichtung gemäß dem dritten Ausführungsbeispiel in einer ersten Blickrichtung;
- Figur 4c: eine perspektivische Schnittdarstellung der ersten Seite der Positionsmesseinrichtung gemäß dem dritten Ausführungsbeispiel;
- Figur 4d: eine perspektivische Explosionsansicht der ersten Seite der Positionsmesseinrichtung gemäß dem dritten Ausführungsbeispiel in einer zweiten Blickrichtung;
- Figur 5a: eine perspektivische Ansicht einer ersten Seite einer Positionsmesseinrichtung gemäß einem vierten Ausführungsbeispiel;
- Figur 5b: eine perspektivische Explosionsansicht der ersten Seite der Positionsmesseinrichtung gemäß dem vierten Ausführungsbeispiel in einer ersten Blickrichtung;
- Figur 5c: eine perspektivische Schnittdarstellung der ersten Seite der Positionsmesseinrichtung gemäß dem vierten Ausführungsbeispiel;
- Figur 5d: eine perspektivische Explosionsansicht der ersten Seite der Positionsmesseinrichtung gemäß dem vierten Ausführungsbeispiel in einer zweiten Blickrichtung;
- Figur 6a: eine perspektivische Ansicht einer ersten Seite einer Positionsmesseinrichtung gemäß einem fünften Ausführungsbeispiel;
- Figur 6b: eine perspektivische Explosionsansicht der ersten Seite der Positionsmesseinrichtung gemäß dem fünften Ausführungsbeispiel in einer ersten Blickrichtung;
- Figur 6c: eine perspektivische Schnittdarstellung der ersten Seite der Positionsmesseinrichtung gemäß dem fünften Ausführungsbeispiel;
- Figur 6d: eine perspektivische Explosionsansicht der ersten Seite der Positionsmesseinrichtung gemäß dem fünften Ausführungsbeispiel in einer zweiten Blickrichtung;
- Figur 7a: eine perspektivische Ansicht einer zweiten Seite der Positionsmesseinrichtung gemäß einem des ersten bis fünften Ausführungsbeispiels;
- Figur 7b: eine perspektivische Explosionsansicht der zweiten Seite der Positionsmesseinrichtung gemäß einem des ersten bis fünften Ausführungsbeispiels in einer ersten Blickrichtung;
- Figur 7c: eine perspektivische Schnittdarstellung der zweiten Seite der Positionsmesseinrichtung gemäß einem des ersten bis fünften Ausführungsbeispiels; und
- Figur 7d: eine perspektivische Explosionsansicht der zweiten Seite der Positionsmesseinrichtung gemäß einem des ersten bis fünften Ausführungsbeispiels in einer zweiten Blickrichtung.

### BESCHREIBUNG DER AUSFÜHRUNGSFORMEN

Gleiche Elemente oder funktionell gleiche Elemente sind in den Figuren mit gleichen Bezugszeichen versehen.

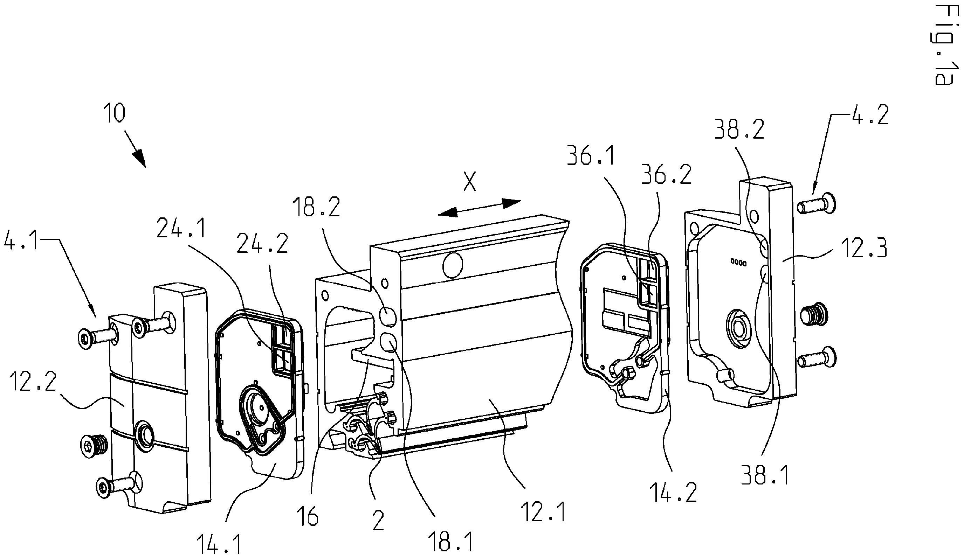

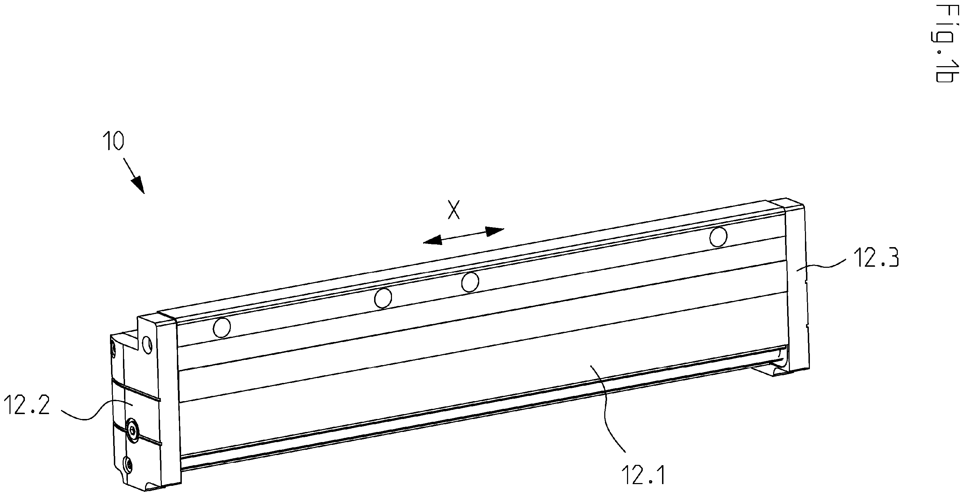

Ein erstes Ausführungsbeispiel wird nachfolgend anhand der Figuren 1a bis 2h erläutert. Die Positionsmesseinrichtung gemäß dem ersten Ausführungsbeispiel umfasst ein Gehäuse 10, das einen sich in einer Längsrichtung X erstreckenden hohlprofilförmigen ersten Abschnitt 12.1 aufweist, einen Maßstab 16, der innerhalb des Gehäuses 10 angeordnet ist, und eine Abtasteinrichtung zur Abtastung des Maßstabs 16. Die Abtasteinrichtung ist in den Figuren nicht dargestellt.

Die Positionsmesseinrichtung ist insbesondere eine Längenmesseinrichtung. Hierzu sind der Maßstab 16 und die Abtasteinrichtung in Längsrichtung X (d. h. Messrichtung) relativ zueinander bewegbar. Die Abtasteinrichtung tastet bei der Positionsmessung eine Messteilung des Maßstabs 16 ab und bildet daraus Positionsmesswerte. Die Messteilung ist in den Figuren nicht dargestellt.

In Längsrichtung X verlaufend weist der erste Abschnitt 12.1 Dichtlippen 2 auf. Durch die Dichtlippen 2 greift ein in den Figuren nicht dargestellter Mitnehmer, an dem die Abtasteinrichtung befestigt ist. Das Gehäuse 10 weist einen an einem Ende des ersten Abschnitts 12.1 angeordneten zweiten Abschnitt 12.2 auf. Ferner weist das Gehäuse 10 einen an dem anderen Ende des ersten Abschnitts 12.1 angeordneten dritten Abschnitt 12.3 auf. Der zweite Abschnitt 12.2 und der dritte Abschnitt 12.3 sind jeweils Deckelelemente. Die Positionsmesseinrichtung weist zudem ein erstes Dichtelement 14.1 auf. Das erste Dichtelement 14.1 ist zwischen dem ersten Abschnitt 12.1 und dem zweiten Abschnitt 12.2 angeordnet. Ferner weist die Positionsmesseinrichtung ein zweites Dichtelement 14.2 auf. Das zweite Dichtelement 14.2 ist zwischen dem ersten Abschnitt 12.1 und dem dritten Abschnitt 12.3 angeordnet. Das erste Dichtelement 14.1 und das zweite Dichtelement 14.2 sind jeweils plattenförmig ausgebildet und dienen zur Abdichtung des Gehäuses 10. Der zweite Abschnitt 12.2 ist durch Schrauben 4.1 an dem einen Ende des ersten Abschnitts 12.1 befestigbar. Ferner ist der dritte Abschnitt 12.3 durch Schrauben 4.2 an dem anderen Ende des ersten Abschnitts 12.1 befestigbar.

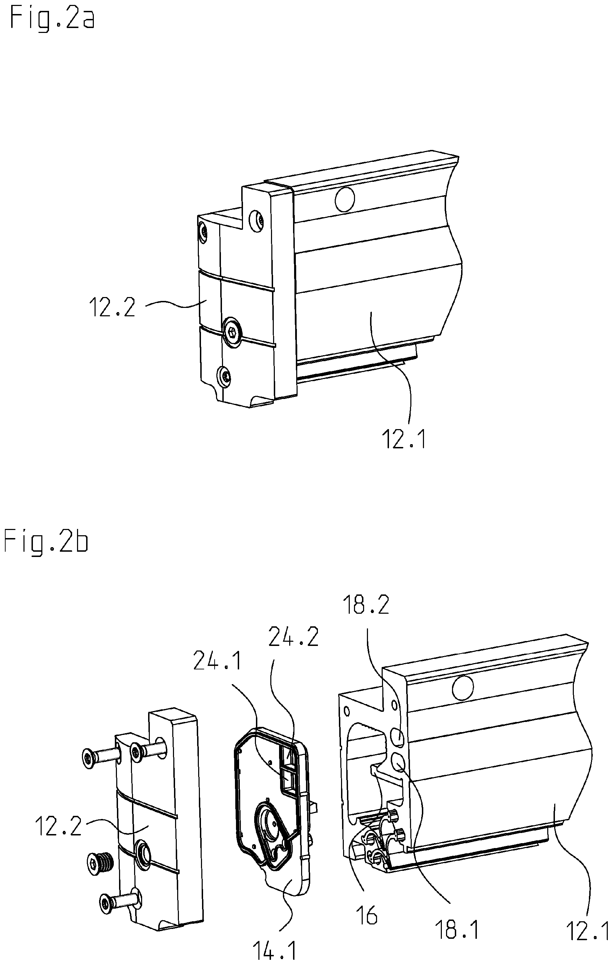

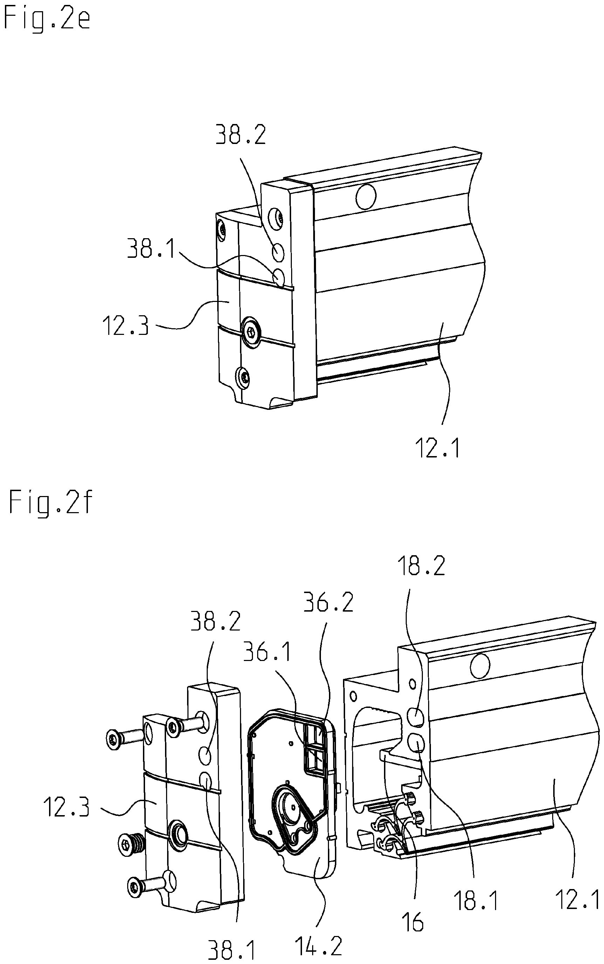

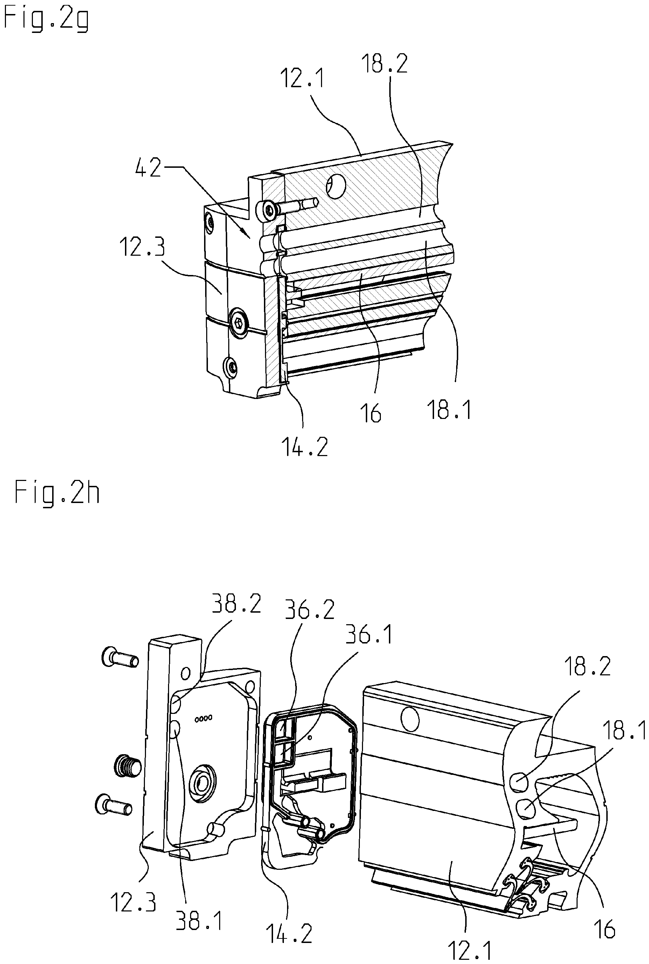

Das Gehäuse 10 weist eine erste Durchgangsöffnung 18.1 und eine zweite Durchgangsöffnung 18.2 auf. Die beiden Durchgangsöffnungen 18.1, 18.2 sind übereinander angeordnet und erstrecken sich jeweils in Längsrichtung X vollständig, d.h. von einer zur anderen Seite, durch den ersten Abschnitt 12.1 hindurch (vgl. Figur 2b und 2f). Die beiden Durchgangsöffnungen 18.1, 18.2 dienen jeweils als Kühlkanäle (d.h. Kanäle für ein Kühlmedium) zur optimalen Kühlung des Maßstabs 16.

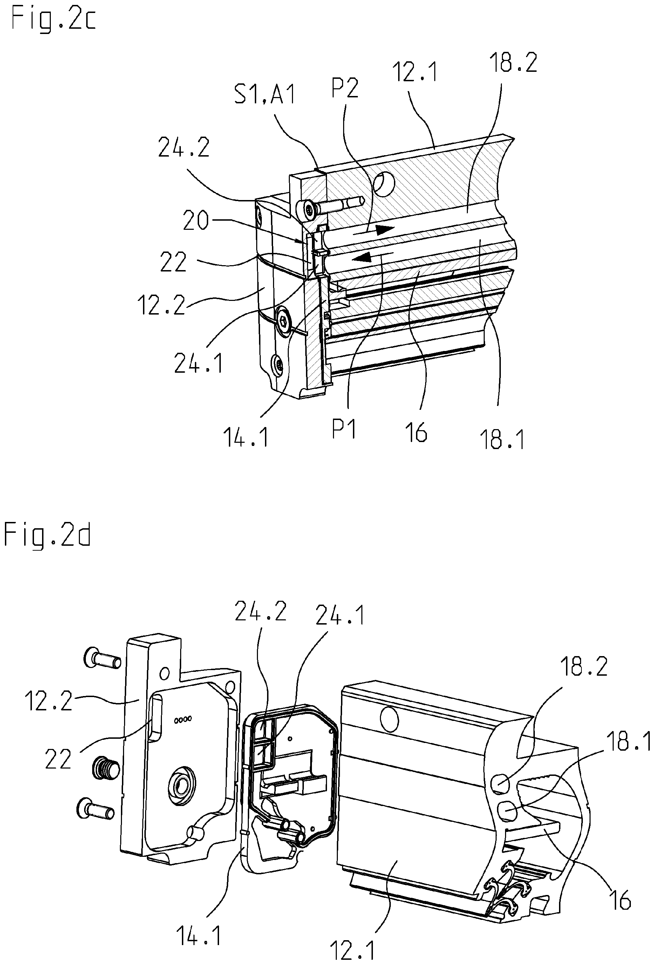

Die Positionsmesseinrichtung weist zudem einen Verbindungskanal 20 auf (vgl. Figur 2c). Die beiden Durchgangsöffnungen 18.1, 18.2 sind über den Verbindungskanal 20 miteinander verbunden. Der Verbindungskanal 20 erstreckt sich zwischen einem Querschnitt der ersten Durchgangsöffnung 18.1 und einem Querschnitt der zweiten Durchgangsöffnung 18.2. Der Verbindungskanal 20 ist derart ausgebildet, dass ein in einer ersten Richtung P1 parallel zur Längsrichtung X durch einen Querschnitt der ersten Durchgangsöffnung 18.1 hindurch strömendes Fluid derart umgelenkt wird, dass es nach dessen Umlenkung in einer zur ersten Richtung P1 entgegengesetzten zweiten Richtung P2 durch einen Querschnitt der zweiten Durchgangsöffnung 18.2 hindurch strömt. Dadurch kann ein Gegenstrom, d.h. ein in die beiden entgegengesetzten Richtungen P1, P2 verlaufender Fluidstrom, erzeugt werden. Dies bewirkt eine homogene Temperaturverteilung des Kühlmediums über die Länge des Maßstabs 16 und somit eine präzise Positionsmessung in Längsrichtung X des Maßstabs 16.

Die beiden Durchgangsöffnungen 18.1, 18.2 erstrecken sich jeweils bis zu einer senkrecht zur Längsrichtung X verlaufenden Ebene S1. Die Ebene S1 fällt mit einer seitlichen Oberfläche A1 des einen Endes des ersten Abschnitts 12.1 zusammen. Dies ist in Figur 2c dargestellt.

Der zweite Abschnitt 12.2 weist eine der ersten Durchgangsöffnung 18.1 und der zweiten Durchgangsöffnung 18.2 gemeinsam zugeordnete Ausnehmung 22 auf. D. h., die Ausnehmung 22 und die beiden Durchgangsöffnungen 18.1, 18.2 liegen sich in Längsrichtung X einander gegenüber. Die Ausnehmung 22 ist in Figur 2d gut sichtbar.

Ferner weist das erste Dichtelement 14.1 eine der ersten Durchgangsöffnung 18.1 zugeordnete Durchgangsöffnung 24.1 und eine der zweiten Durchgangsöffnung 18.2 zugeordnete Durchgangsöffnung 24.2 auf. D. h., die beiden Durchgangsöffnungen 24.1, 24.2 und die beiden Durchgangsöffnungen 18.1, 18.2 liegen sich jeweils in Längsrichtung X einander gegenüber. Die beiden Durchgangsöffnungen 24.1, 24.2 sind in Figur 2b und 2d gut sichtbar.

Wie in Figur 2c gezeigt, wird der Verbindungskanal 20 durch die beiden Durchgangsöffnungen 24.1, 24.2 und die Ausnehmung 22 gebildet. Der Verbindungskanal 20 dient zur fluidischen Verbindung zwischen Querschnitten (d. h. die Querschnitte in der Ebene S1) der beiden Durchgangsöffnungen 18.1, 18.2.

Zur Bereitstellung des Anschlusses für den Fluideingang und für den Fluidausgang weist das zweite Dichtelement 14.2 eine der ersten Durchgangsöffnung 18.1 zugeordnete Durchgangsöffnung 36.1 und eine der zweiten Durchgangsöffnung 18.2 zugeordnete Durchgangsöffnung 36.2 auf. Ferner weist der dritte Abschnitt 12.3 eine der ersten Durchgangsöffnung 18.1 zugeordnete Durchgangsöffnung 38.1 und eine der zweiten Durchgangsöffnung 18.2 zugeordnete Durchgangsöffnung 38.2 auf. Wie in Figur 2f dargestellt, liegen sich die beiden Durchgangsöffnungen 36.1, 36.2 und die beiden Durchgangsöffnungen 18.1, 18.2 jeweils in Längsrichtung X einander gegenüber. Ferner liegen sich die beiden Durchgangsöffnungen 38.1, 38.2 und die beiden Durchgangsöffnungen 36.1, 36.2 bzw. die beiden Durchgangsöffnungen 38.1, 38.2 und die beiden Durchgangsöffnungen 18.1, 18.2 jeweils in Längsrichtung X einander gegenüber. Der durch die beiden Durchgangsöffnungen 36.1, 36.2 und die beiden Durchgangsöffnungen 38.1, 38.2 gebildete Anschluss 42 ist in Figur 2g dargestellt. Der Anschluss 42 ist an dem anderen Ende des ersten Abschnitts 12.1 angeordnet.

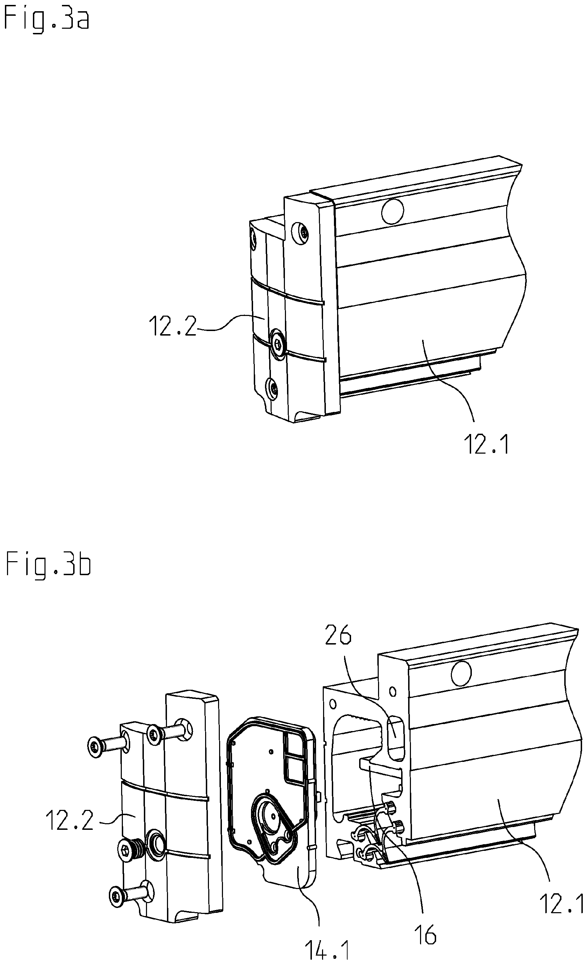

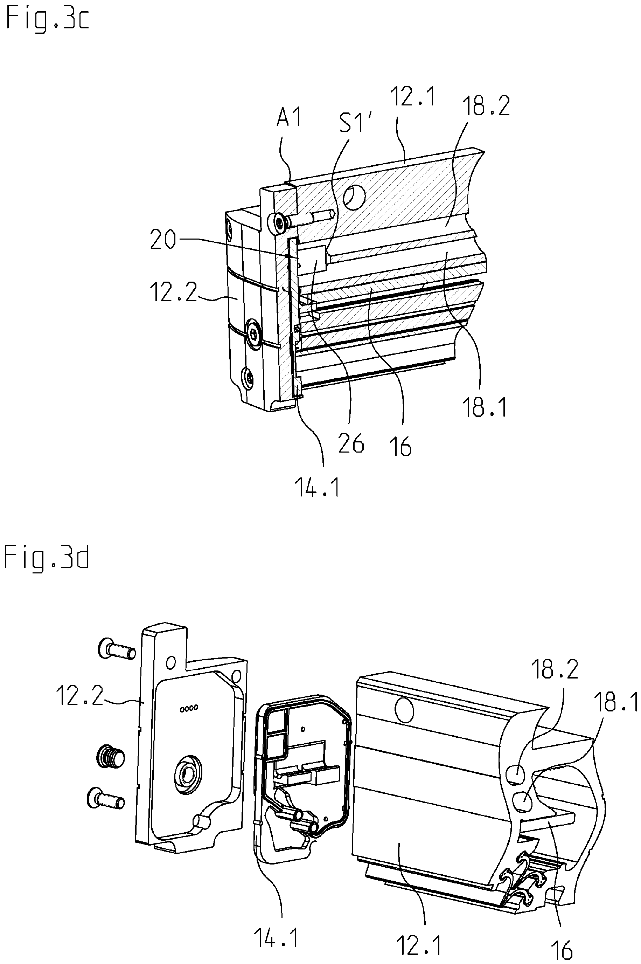

In den Figuren 3a bis 3d sind verschiedene Ansichten einer ersten Seite (Umlenkseite) einer Positionsmesseinrichtung gemäß einem zweiten Ausführungsbeispiel gezeigt. Die Positionsmesseinrichtung gemäß dem zweiten Ausführungsbeispiel unterscheidet sich von der Positionsmesseinrichtung gemäß dem ersten Ausführungsbeispiel dadurch, dass sich die beiden Durchgangsöffnungen 18.1, 18.2 jeweils in Längsrichtung X nur teilweise durch den ersten Abschnitt 12.1 hindurch erstrecken. Wie in Figur 3c dargestellt, erstrecken sich die beiden Durchgangsöffnungen 18.1, 18.2 jeweils bis zu einer senkrecht zur Längsrichtung X verlaufenden Ebene S1'. Die Ebene S1' ist relativ zur seitlichen Oberfläche A1 des einen Endes des ersten Abschnitts 12.1 in Längsrichtung X versetzt. Ferner weist der erste Abschnitt 12.1 eine an die erste Durchgangsöffnung 18.1 und an die zweite Durchgangsöffnung 18.2 angrenzende Ausnehmung 26 auf (vgl. Figuren 3b und 3c).

In Bezug auf Figur 3d ist zudem der zweite Abschnitt 12.2 zumindest in einem der ersten Durchgangsöffnung 18.1 und der zweiten Durchgangsöffnung 18.2 zugeordneten, d. h. in Längsrichtung X gegenüberliegenden Bereich durchgängig ausgebildet. Ferner ist in Bezug auf Figur 3d das erste Dichtelement 14.1 zumindest in einem der ersten Durchgangsöffnung 18.1 und der zweiten Durchgangsöffnung 18.2 zugeordneten, d. h. in Längsrichtung X gegenüberliegenden Bereich durchgängig ausgebildet. Durchgängig ausgebildet bedeutet dabei jeweils, dass der Bereich keine Ausnehmung und/oder Durchgangsöffnungen aufweist.

Wie in Figur 3c gezeigt, wird der Verbindungskanal 20 durch die Ausnehmung 26 gebildet. Die Ausnehmung 26 erstreckt sich von der Ebene S1' zur Ebene A1. Die Ebene A1 fällt mit einer dem ersten Abschnitt 12.1 zugewandten seitlichen Oberfläche des ersten Dichtelements 14.1 zusammen.

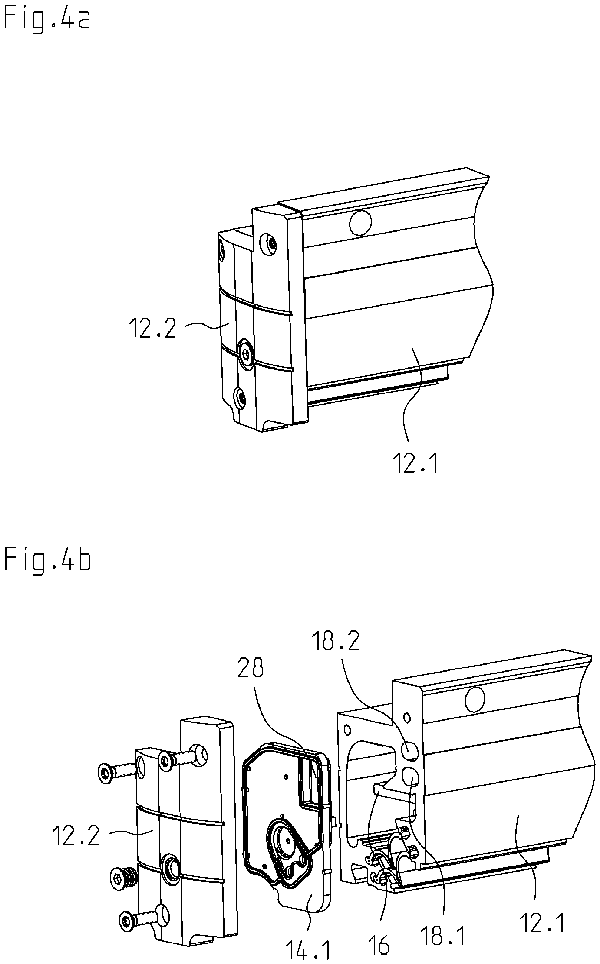

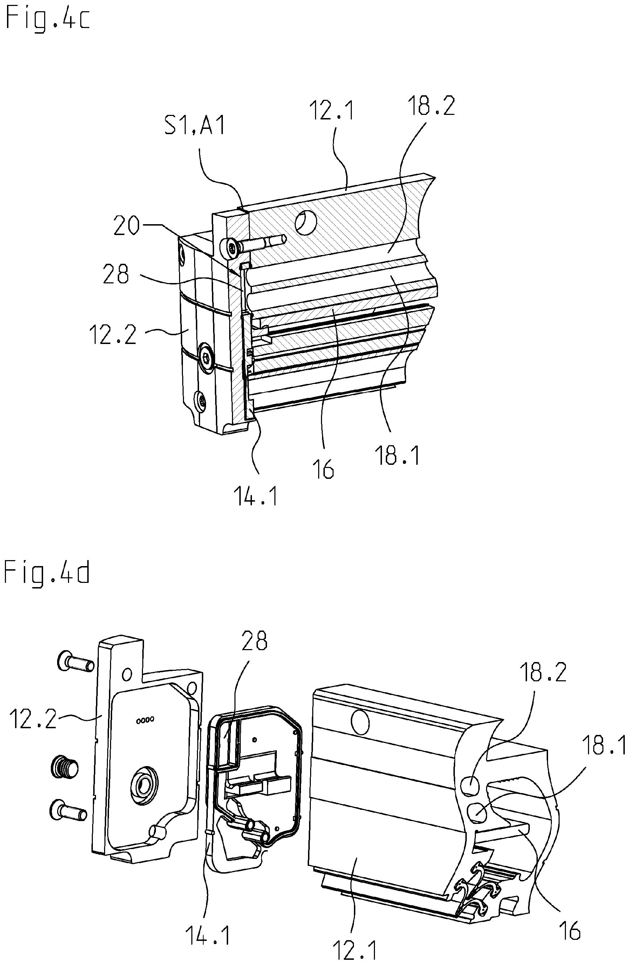

In den Figuren 4a bis 4d sind verschiedene Ansichten einer ersten Seite (Umlenkseite) einer Positionsmesseinrichtung gemäß einem dritten Ausführungsbeispiel gezeigt. Die Positionsmesseinrichtung gemäß dem dritten Ausführungsbeispiel unterscheidet sich von der Positionsmesseinrichtung gemäß dem ersten Ausführungsbeispiel dadurch, dass das erste Dichtelement 14.1 eine der ersten Durchgangsöffnung 18.1 und der zweiten Durchgangsöffnung 18.2 gemeinsam zugeordnete Ausnehmung 28 aufweist. Wie in Figur 4b und 4d gezeigt, erstreckt sich die Ausnehmung 28 in Längsrichtung X vollständig durch das erste Dichtelement 14.1 hindurch. Ferner ist der zweite Abschnitt 12.2 zumindest in einem der ersten Durchgangsöffnung 18.1 und der zweiten Durchgangsöffnung 18.2 zugeordneten, d. h. in Längsrichtung X gegenüberliegenden Bereich durchgängig ausgebildet. Durchgängig ausgebildet bedeutet dabei, dass der Bereich keine Ausnehmung und/oder Durchgangsöffnung aufweist.

Wie in Figur 4c gezeigt, wird der Verbindungskanal 20 durch die Ausnehmung 28 gebildet. Die Ausnehmung 28 erstreckt sich von der Ebene S1 bzw. A1 bis zu einer dem ersten Abschnitt 12.1 zugewandten (inneren) seitlichen Oberfläche des zweiten Abschnitts 12.2. Die innere seitliche Oberfläche des zweiten Abschnitts 12.2 ist relativ zur Ebene S1 bzw. A1 in Längsrichtung X versetzt.

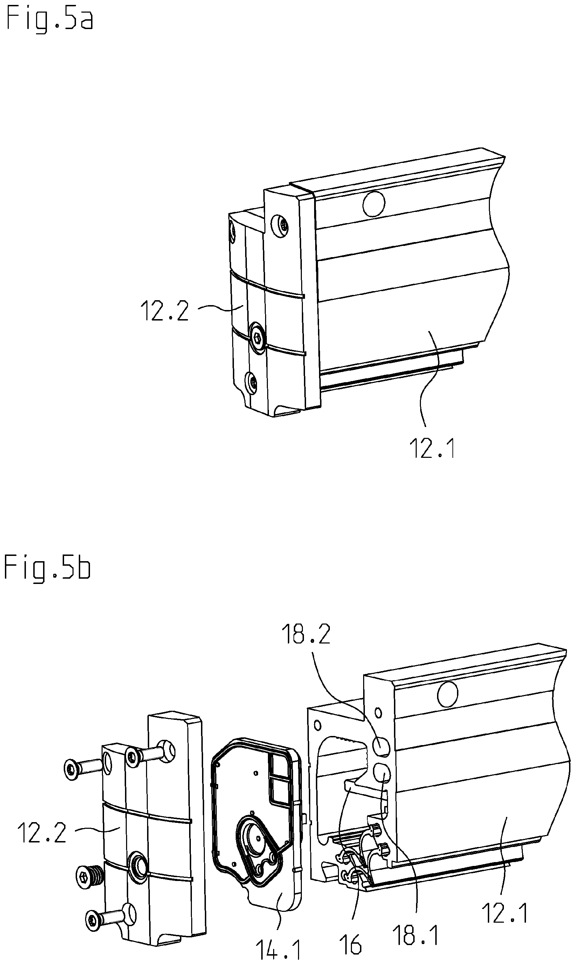

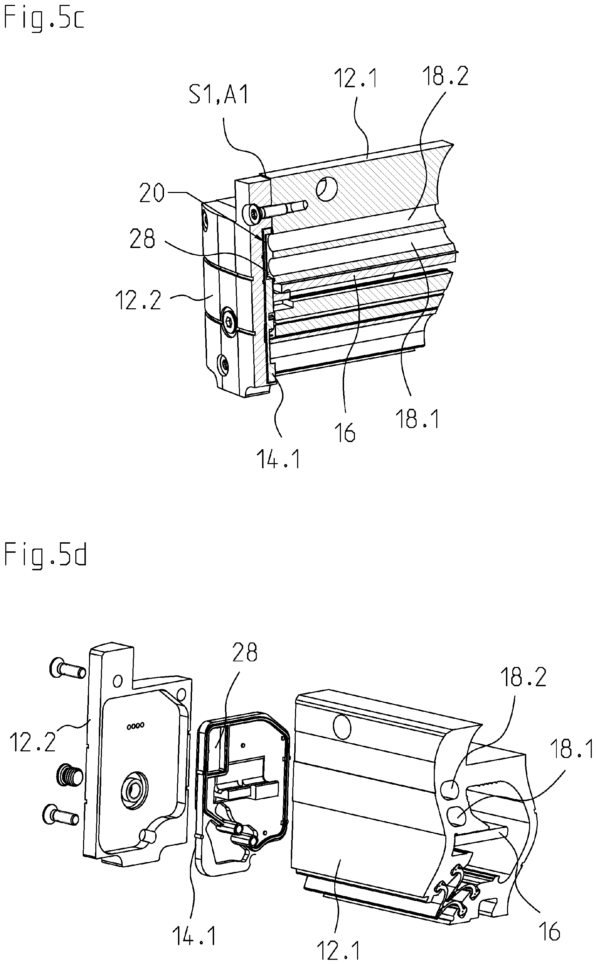

In den Figuren 5a bis 5d sind verschiedene Ansichten einer ersten Seite (Umlenkseite) einer Positionsmesseinrichtung gemäß einem vierten Ausführungsbeispiel gezeigt. Die Positionsmesseinrichtung gemäß dem vierten Ausführungsbeispiel unterscheidet sich von der Positionsmesseinrichtung gemäß dem ersten Ausführungsbeispiel dadurch, dass das erste Dichtelement 14.1 eine der ersten Durchgangsöffnung 18.1 und der zweiten Durchgangsöffnung 18.2 gemeinsam zugeordnete Ausnehmung 28 aufweist. Wie in Figur 5b und 5d gezeigt, erstreckt sich die Ausnehmung 28 in Längsrichtung X nur teilweise durch das erste Dichtelement 14.1 hindurch. Ferner ist der zweite Abschnitt 12.2 zumindest in einem der ersten Durchgangsöffnung 18.1 und der zweiten Durchgangsöffnung 18.2 zugeordneten, d. h. in Längsrichtung X gegenüberliegenden Bereich durchgängig ausgebildet. Durchgängig ausgebildet bedeutet dabei, dass der Bereich keine Ausnehmung und/oder Durchgangsöffnung aufweist.

Wie in Figur 5c gezeigt, wird der Verbindungskanal 20 durch die Ausnehmung 28 gebildet. Die Ausnehmung 28 erstreckt sich von der Ebene S1 bzw. A1 bis zu einer dem ersten Abschnitt 12.1 zugewandten (inneren) seitlichen Oberfläche des ersten Dichtelements 14.1. Die innere seitliche Oberfläche des ersten Dichtelements 14.1 ist relativ zur Ebene S1 bzw. A1 in Längsrichtung X versetzt.

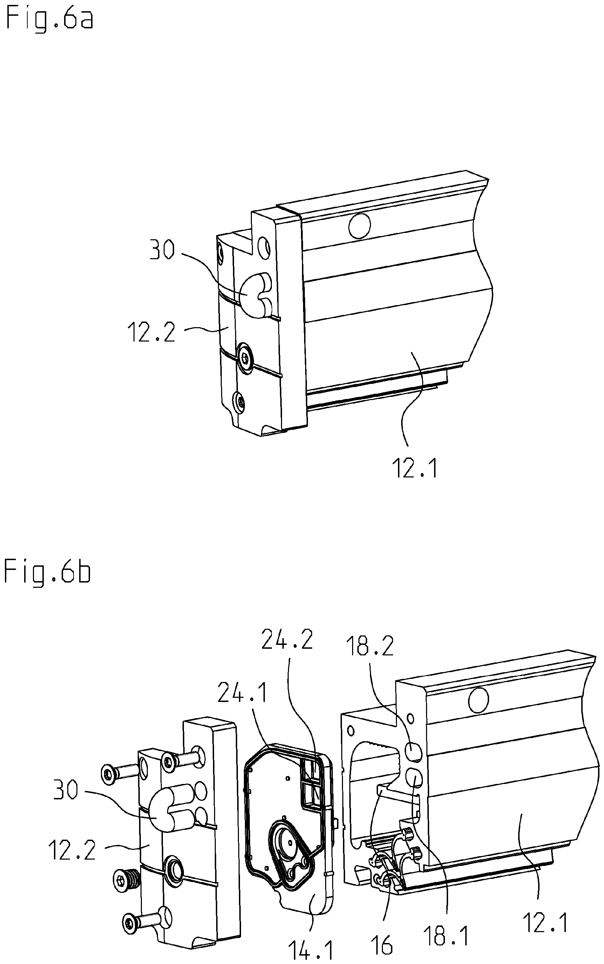

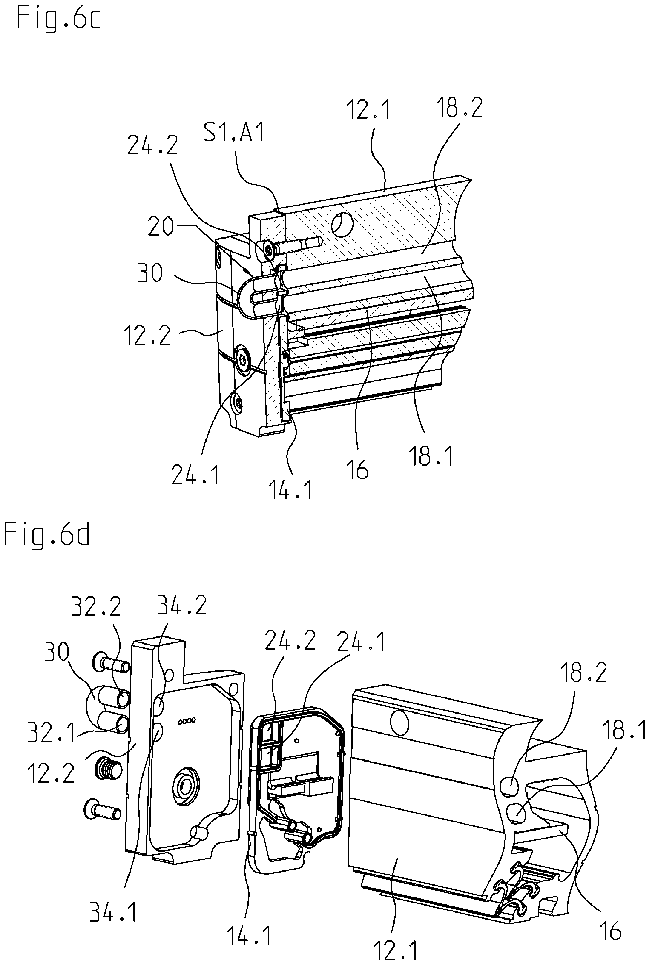

In den Figuren 6a bis 6d sind verschiedene Ansichten einer ersten Seite (Umlenkseite) einer Positionsmesseinrichtung gemäß einem fünften Ausführungsbeispiel gezeigt. Die Positionsmesseinrichtung gemäß dem fünften Ausführungsbeispiel unterscheidet sich von der Positionsmesseinrichtung gemäß dem ersten Ausführungsbeispiel dadurch, dass der zweite Abschnitt 12.2 eine der ersten Durchgangsöffnung 18.1 zugeordnete Durchgangsöffnung 34.1 und eine der zweiten Durchgangsöffnung 18.2 zugeordnete Durchgangsöffnung 34.2 aufweist. Die beiden Durchgangsöffnungen 34.1, 34.2 liegen den beiden Durchgangsöffnungen 18.1, 18.2 jeweils in Längsrichtung X einander gegenüber. Ferner weist die Positionsmesseinrichtung ein U-förmiges Umlenkelement 30 auf. Das Umlenkelement 30 weist eine der ersten Durchgangsöffnung 18.1 zugeordnete Ein- oder Ausgangsöffnung 32.1 und eine der zweiten Durchgangsöffnung 18.2 zugeordnete Ein- oder Ausgangsöffnung 32.2 auf. Wie in Figur 6c gezeigt, wird der Verbindungskanal 20 durch die beiden in dem ersten Dichtelement 14.1 gebildeten Durchgangsöffnungen 24.1, 24.2 und das in die beiden Durchgangsöffnungen 34.1, 34.2 des zweiten Abschnitts 12.2 eingesetzte Umlenkelement 30 gebildet. Das Umlenkelement 30 ragt in Längsrichtung X über den zweiten Abschnitt 12.2 hinaus.

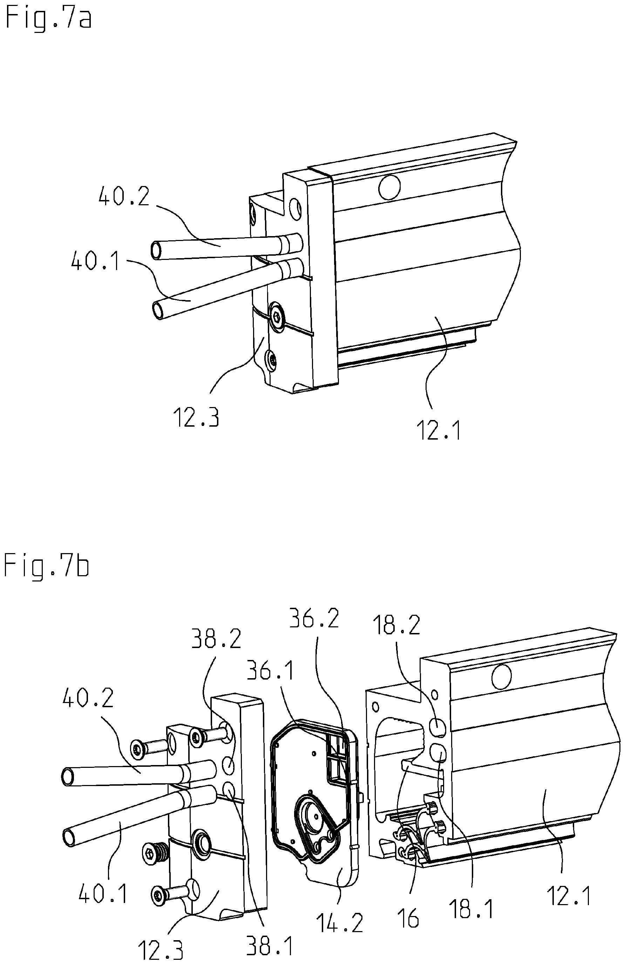

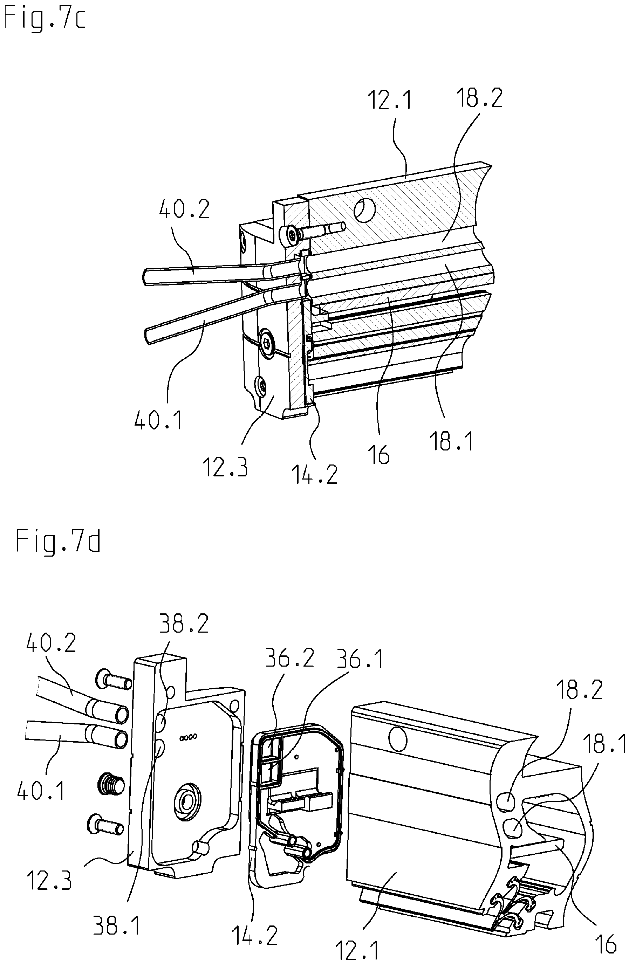

Figur 7a bis 7d zeigen verschiedene Ansichten einer zweiten Seite (Anschlussseite) der Positionsmesseinrichtung gemäß einem des ersten bis fünften Ausführungsbeispiels. Die in Figur 7a bis 7d gezeigte zweite Seite der Positionsmesseinrichtung entspricht insbesondere derjenigen von Figur 1a. Wie in Figur 7a bis 7d gezeigt, kann die zweite Seite der Positionsmesseinrichtung einen ersten Fluideingang oder Fluidausgang 40.1 und einen zweiten Fluideingang oder Fluidausgang 40.2 aufweisen. Der erste Fluideingang oder Fluidausgang 40.1 ist der ersten Durchgangsöffnung 18.1 zugeordnet. Der zweite Fluideingang oder Fluidausgang 40.2 ist der zweiten Durchgangsöffnung 18.2 zugeordnet. Der angeschlossene Zustand des ersten und zweiten Fluideingangs oder Fluidausgangs 40.1, 40.2 ist insbesondere in Figur 7c dargestellt. Durch den ersten und zweiten Fluideingang oder Fluidausgang 40.1, 40.2 wird der Anschluss der Positionsmesseinrichtung an einen Kühlkreislauf erreicht.

Der erste und zweite Fluideingang oder Fluidausgang 40.1, 40.2 sind beispielsweise jeweils ein Anschluss- bzw. Verbindungsschlauch.

Vorzugsweise ist der erste Fluideingang oder Fluidausgang 40.1 ein Fluideingang. Der zweite Fluideingang oder Fluidausgang 40.2 ist vorzugsweise ein Fluidausgang. Somit kann in vorteilhafter Weise der Fluideingang 40.1 und der Fluidausgang 40.2 auf einer einzigen (gleichen) Seite der Positionsmesseinrichtung vorgesehen sein. Die Umlenkung des Fluidstroms kann dann auf der anderen, d. h. der in Längsrichtung X gegenüberliegenden Seite der Positionsmesseinrichtung stattfinden.

Bei allen Ausführungsbeispielen können auch mehr als zwei sich jeweils in Längsrichtung zumindest teilweise durch den ersten Abschnitt 12.1 hindurch erstreckende Durchgangsöffnungen vorgesehen sein. In diesem Fall kann die Positionsmesseinrichtung mehrere Verbindungskanäle aufweisen, über die die Durchgangsöffnungen jeweils paarweise miteinander verbunden sind.

## Patentansprüche

1. Positionsmesseinrichtung, mit
einem Gehäuse (10), das einen sich in einer Längsrichtung (X) erstreckenden hohlprofilförmigen ersten Abschnitt (12.1) aufweist, einem Maßstab (16), der innerhalb des Gehäuses (10) angeordnet ist, wobei sich der Maßstab (16) in Längsrichtung (X) erstreckt, und einer Abtasteinrichtung zur Abtastung des Maßstabs (16), wobei das Gehäuse (10) mindestens eine erste Durchgangsöffnung (18.1) und eine zweite Durchgangsöffnung (18.2) aufweist, wobei sich die beiden Durchgangsöffnungen (18.1, 18.2) jeweils in Längsrichtung (X) zumindest teilweise durch den ersten Abschnitt (12.1) hindurch erstrecken, wobei die Positionsmesseinrichtung einen an einem Ende des ersten Abschnitts (12.1) angeordneten Verbindungskanal (20) aufweist, wobei die beiden Durchgangsöffnungen (18.1, 18.2) über den Verbindungskanal (20) miteinander verbunden sind, wobei sich der Verbindungskanal (20) zwischen einem Querschnitt der ersten Durchgangsöffnung (18.1) und einem Querschnitt der zweiten Durchgangsöffnung (18.2) erstreckt, **dadurch gekennzeichnet, dass** der Verbindungskanal (20) derart ausgebildet ist, dass ein in einer ersten Richtung (P1) parallel zur Längsrichtung (X) durch einen Querschnitt der ersten Durchgangsöffnung (18.1) hindurch strömendes Fluid derart umgelenkt wird, dass es nach dessen Umlenkung in einer zur ersten Richtung (P1) entgegengesetzten zweiten Richtung (P2) durch einen Querschnitt der zweiten Durchgangsöffnung (18.2) hindurch strömt.

2. Positionsmesseinrichtung nach Anspruch 1, wobei sich die beiden Durchgangsöffnungen (18.1, 18.2) jeweils bis zu einer senkrecht zur Längsrichtung (X) verlaufenden Ebene (S1) erstrecken, wobei die Ebene (S1) mit einer seitlichen Oberfläche (A1) des Endes des ersten Abschnitts (12.1) zusammenfällt.

3. Positionsmesseinrichtung nach Anspruch 1, wobei sich die beiden Durchgangsöffnungen (18.1, 18.2) jeweils bis zu einer senkrecht zur Längsrichtung (X) verlaufenden Ebene (S1') erstrecken, wobei die Ebene (S1') relativ zu einer seitlichen Oberfläche (A1) des Endes des ersten Abschnitts (12.1) in Längsrichtung (X) versetzt ist.

4. Positionsmesseinrichtung nach Anspruch 3, wobei der erste Abschnitt (12.1) eine an die erste Durchgangsöffnung (18.1) und an die zweite Durchgangsöffnung (18.2) angrenzende Ausnehmung (26) aufweist, wobei durch die Ausnehmung (26) der Verbindungskanal (20) gebildet wird.

5. Positionsmesseinrichtung nach einem der vorhergehenden Ansprüche, wobei das Gehäuse (10) einen an dem Ende des ersten Abschnitts (12.1) angeordneten zweiten Abschnitt (12.2) aufweist, wobei der zweite Abschnitt (12.2) ein Deckelelement ist.

6. Positionsmesseinrichtung nach Anspruch 5 und 2, wobei der zweite Abschnitt (12.2) eine der ersten Durchgangsöffnung (18.1) und der zweiten Durchgangsöffnung (18.2) zugeordnete Ausnehmung (22) aufweist, wobei durch die Ausnehmung (22) der Verbindungskanal (20) zumindest teilweise gebildet wird.

7. Positionsmesseinrichtung nach Anspruch 5, wobei der zweite Abschnitt (12.2) zumindest in einem der ersten Durchgangsöffnung (18.1) und der zweiten Durchgangsöffnung (18.2) zugeordneten Bereich durchgängig ausgebildet ist, wobei durchgängig ausgebildet bedeutet, dass der Bereich keine Ausnehmung und/oder Durchgangsöffnungen aufweist.

8. Positionsmesseinrichtung nach Anspruch 5 und 2, wobei der zweite Abschnitt (12.2) eine der ersten Durchgangsöffnung (18.1) zugeordnete Durchgangsöffnung (34.1) und eine der zweiten Durchgangsöffnung (18.2) zugeordnete Durchgangsöffnung (34.2) aufweist.

9. Positionsmesseinrichtung nach einem der Ansprüche 5 bis 8, wobei die Positionsmesseinrichtung ein erstes Dichtelement (14.1) aufweist, wobei das erste Dichtelement (14.1) zwischen dem ersten Abschnitt (12.1) und dem zweiten Abschnitt (12.2) angeordnet ist.

10. Positionsmesseinrichtung nach Anspruch 9 und 2, wobei das erste Dichtelement (14.1) eine der ersten Durchgangsöffnung (18.1) zugeordnete Durchgangsöffnung (24.1) und eine der zweiten Durchgangsöffnung (18.2) zugeordnete Durchgangsöffnung (24.2) aufweist.

11. Positionsmesseinrichtung nach Anspruch 9, 5 und 3, wobei das erste Dichtelement (14.1) zumindest in einem der ersten Durchgangsöffnung (18.1) und der zweiten Durchgangsöffnung (18.2) zugeordneten Bereich durchgängig ausgebildet ist, wobei durchgängig ausgebildet bedeutet, dass der Bereich keine Ausnehmung und/oder Durchgangsöffnungen aufweist.

12. Positionsmesseinrichtung nach Anspruch 9, 5 und 2, wobei das erste Dichtelement (14.1) eine der ersten Durchgangsöffnung (18.1) und der zweiten Durchgangsöffnung (18.2) zugeordnete Ausnehmung (28) aufweist, wobei sich die Ausnehmung (28) in Längsrichtung (X) zumindest teilweise durch das erste Dichtelement (14.1) hindurch erstreckt, wobei durch die Ausnehmung (28) der Verbindungskanal (20) gebildet wird.

13. Positionsmesseinrichtung nach Anspruch 2, wobei die Positionsmesseinrichtung ein U-förmiges Umlenkelement (30) aufweist, wobei das Umlenkelement (30) eine der ersten Durchgangsöffnung (18.1) zugeordnete Ein- oder Ausgangsöffnung (32.1) und eine der zweiten Durchgangsöffnung (18.2) zugeordnete Ein- oder Ausgangsöffnung (32.2) aufweist.

## Claims

1. Position measuring device, comprising
a housing (10), which has a first section (12.1) in the form of a hollow profile extending in a longitudinal direction (X), a scale (16), which is arranged within the housing (10), the scale (16) extending in the longitudinal direction (X), and a scanning device for scanning the scale (16), wherein the housing (10) has at least a first passage opening (18.1) and a second passage opening (18.2), the two passage openings (18.1, 18.2) each extending in the longitudinal direction (X) at least partly through the first section (12.1), wherein the position measuring device has a connecting channel (20) arranged at one end of the first section (12.1), the two passage openings (18.1, 18.2) being connected to each other via the connecting channel (20), wherein the connecting channel (20) extends between a cross section of the first passage opening (18.1) and a cross section of the second passage opening (18.2),
**characterized in that**
the connecting channel (20) is formed in such a way that a fluid flowing through a cross section of the first passage opening (18.1) in a first direction (P1) parallel to the longitudinal direction (X) is deflected in such a way that, following its deflection, it flows through a cross section of the second passage opening (18.2) in a second direction (P2) opposite to the first direction (P1) .

2. Position measuring device according to Claim 1, wherein the two passage openings (18.1, 18.2) each extend as far as a plane (S1) running at right angles to the longitudinal direction (X), wherein the plane (S1) coincides with a lateral surface (A1) of the end of the first section (12.1).

3. Position measuring device according to Claim 1, wherein the two passage openings (18.1, 18.2) each extend as far as a plane (S1') running at right angles to the longitudinal direction (X), wherein the plane (S1') is offset in the longitudinal direction (X) relative to a lateral surface (A1) of the end of the first section (12.1).

4. Position measuring device according to Claim 3, wherein the first section (12.1) has a recess (26) adjoining the first passage opening (18.1) and the second passage opening (18.2), wherein the connecting channel (20) is formed by the recess (26).

5. Position measuring device according to one of the preceding claims, wherein the housing (10) has a second section (12.2) arranged at the end of the first section (12.1), wherein the second section (12.2) is a cover element.

6. Position measuring device according to Claim 5 and 2, wherein the second section (12.2) has a recess (22) associated with the first passage opening (18.1) and the second passage opening (18.2), wherein the connecting channel (20) is at least partly formed by the recess (22) .

7. Position measuring device according to Claim 5, wherein the second section (12.2) is designed to be continuous, at least in a region associated with the first passage opening (18.1) and the second passage opening (18.2), wherein designed to be continuous means that the region has no recess and/or passage openings.

8. Position measuring device according to Claim 5 and 2, wherein the second section (12.2) has a passage opening (34.1) associated with the first passage opening (18.1) and a passage opening (34.2) associated with the second passage opening (18.2).

9. Position measuring device according to one of Claims 5 to 8, wherein the position measuring device has a first sealing element (14.1), wherein the first sealing element (14.1) is arranged between the first section (12.1) and the second section (12.2).

10. Position measuring device according to Claim 9 and 2, wherein the first sealing element (14.1) has a passage opening (24.1) associated with the first passage opening (18.1) and a passage opening (24.2) associated with the second passage opening (18.2).

11. Position measuring device according to Claim 9, 5 and 3, wherein the first sealing element (14.1) is designed to be continuous at least in a region associated with the first passage opening (18.1) and the second passage opening (18.2), wherein designed to be continuous means that the region has no recess and/or passage openings.

12. Position measuring device according to Claim 9, 5 and 2, wherein the first sealing element (14.1) has a recess (28) associated with the first passage opening (18.1) and the second passage opening (18.2), wherein the recess (28) extends in the longitudinal direction (X) at least partly through the first sealing element (14.1), wherein the connecting channel (20) is formed by the recess (28).

13. Position measuring device according to Claim 2, wherein the position measuring device has a U-shaped deflection element (30), wherein the deflection element (30) has an inlet or outlet opening (32.1) associated with the first passage opening (18.1), and an inlet or outlet opening (32.2) associated with the second passage opening (18.2).

## Revendications

1. Dispositif de mesure de position, avec
un boîtier (10), qui présente une première section (12.1) en forme de profilé creux s'étendant dans une direction longitudinale (X), une tige de mesure (16) qui est agencée à l'intérieur du boîtier (10), la tige de mesure (16) s'étendant dans la direction longitudinale (X), et un dispositif de balayage pour le balayage de la tige de mesure (16), le boîtier (10) présentant au moins une première ouverture de passage (18.1) et une deuxième ouverture de passage (18.2), les deux ouvertures de passage (18.1, 18.2) s'étendant chacune dans la direction longitudinale (X) au moins partiellement à travers la première section (12.1), le dispositif de mesure de position présentant un canal de liaison(20) agencé à une extrémité de la première section (12.1), les deux ouvertures de passage (18.1, 18.2) étant reliées entre elles par l'intermédiaire du canal de liaison (20), le canal de liaison (20) s'étendant entre une section transversale de la première ouverture de passage (18.1) et une section transversale de la deuxième ouverture de passage (18.2), **caractérisé en ce que** le canal de liaison (20) est réalisé de telle sorte qu'un fluide s'écoulant dans une première direction (P1) parallèle à la direction longitudinale (X) à travers une section transversale de la première ouverture de passage (18.1) est dévié de telle sorte qu'il s'écoule après sa déviation dans une deuxième direction (P2) opposée à la première direction (P1) à travers une section transversale de la deuxième ouverture de passage (18.2).

2. Dispositif de mesure de position selon la revendication 1, dans lequel les deux ouvertures de passage (18.1, 18.2) s'étendent chacune jusqu'à un plan (S1) perpendiculaire à la direction longitudinale (X), le plan (S1) coïncidant avec une surface latérale (A1) de l'extrémité de la première section (12.1).

3. Dispositif de mesure de position selon la revendication 1, dans lequel les deux ouvertures de passage (18.1, 18.2) s'étendent chacune jusqu'à un plan (S1') perpendiculaire à la direction longitudinale (X), le plan (S1') étant décalé par rapport à une surface latérale (A1) de l'extrémité de la première section (12.1) dans la direction longitudinale (X).

4. Dispositif de mesure de position selon la revendication 3, dans lequel la première section (12.1) présente un évidement (26) adjacent à la première ouverture de passage (18.1) et à la deuxième ouverture de passage (18.2), le canal de liaison (20) étant formé par l'évidement (26).

5. Dispositif de mesure de position selon l'une quelconque des revendications précédentes, dans lequel le boîtier (10) présente une deuxième section (12.2) agencée à l'extrémité de la première section (12.1), la deuxième section (12.2) étant un élément de couvercle.

6. Dispositif de mesure de position selon les revendications 5 et 2, dans lequel la deuxième section (12.2) présente un évidement (22) associé à la première ouverture de passage (18.1) et à la deuxième ouverture de passage (18.2), le canal de liaison (20) étant au moins partiellement formé par l'évidement (22).

7. Dispositif de mesure de position selon la revendication 5, dans lequel la deuxième section (12.2) est réalisée sous forme continue au moins dans une zone associée à la première ouverture de passage (18.1) et à la deuxième ouverture de passage (18.2), réalisée sous forme continue signifiant que la zone ne présente pas d'évidement et/ou d'ouvertures de passage.

8. Dispositif de mesure de position selon les revendications 5 et 2, dans lequel la deuxième section (12.2) présente une ouverture de passage (34.1) associée à la première ouverture de passage (18.1) et une ouverture de passage (34.2) associée à la deuxième ouverture de passage (18.2).

9. Dispositif de mesure de position selon l'une quelconque des revendications 5 à 8, dans lequel le dispositif de mesure de position présente un premier élément d'étanchéité (14.1), le premier élément d'étanchéité (14.1) étant agencé entre la première section (12.1) et la deuxième section (12.2).

10. Dispositif de mesure de position selon les revendications 9 et 2, dans lequel le premier élément d'étanchéité (14.1) présente une ouverture de passage (24.1) associée à la première ouverture de passage (18.1) et une ouverture de passage (24.2) associée à la deuxième ouverture de passage (18.2).

11. Dispositif de mesure de position selon les revendications 9, 5 et 3, dans lequel le premier élément d'étanchéité (14.1) est réalisé sous forme continue au moins dans une zone associée à la première ouverture de passage (18.1) et à la deuxième ouverture de passage (18.2), réalisé sous forme continue signifiant que la zone ne présente pas d'évidement et/ou d'ouvertures de passage.

12. Dispositif de mesure de position selon les revendications 9, 5 et 2, dans lequel le premier élément d'étanchéité (14.1) présente un évidement (28) associé à la première ouverture de passage (18.1) et à la deuxième ouverture de passage (18.2), l'évidement (28) s'étendant dans la direction longitudinale (X) au moins partiellement à travers le premier élément d'étanchéité (14.1), le canal de liaison (20) étant formé par l'évidement (28).

13. Dispositif de mesure de position selon la revendication 2, dans lequel le dispositif de mesure de position présente un élément de déviation (30) en forme de U, l'élément de déviation (30) présentant une ouverture d'entrée ou de sortie (32.1) associée à la première ouverture de passage (18.1) et une ouverture d'entrée ou de sortie (32.2) associée à la deuxième ouverture de passage (18.2).
